# FASCICULE DE BREVET EUROPEEN

(11) **EP 1 035 391 B1**
(45) Date de publication et mention de la délivrance du brevet: **24.03.2004**
(21) Numéro de dépôt: 00400236.6
(22) Date de dépôt: 31.01.2000
(51) Int. Cl.: F25J 3/04, B01D 53/047, B01D 53/04

(54) **Procédé et installation de purification et de séparation d'air par voie cryogénique sans pré-refroidissement**
Verfahren und Vorrichtung zur Reinigung und Kryogen-Trennung von Luft ohne Vorkühlung
Process and apparatus for purification and cryogenic separation of air without precooling

(30) Priorité: 12.03.1999 FR 9903064
(43) Date de publication de la demande: 13.09.2000
(73) Titulaire: L'air Liquide, S.A. à Directoire et Conseil de Surveillance pour l'Etude et l'Exploitation des Procédés Georges Claude, 75321 Paris Cedex 07 (FR)
(72) Inventeur: Kraus, Georges, 75006 Paris (FR); Le Bot, Patrick, 94300 Vincennes (FR); Guillard, Alain, 75016 Paris (FR); Fraysse, Philippe, 78180 Montigny Le Brettonneux (FR)
(74) Mandataire: Pittis, Olivier

(56) Documents cités:
- EP-A- 0 718 576
- EP-A- 0 733 393
- EP-A- 0 895 046
- US-A- 4 249 915
- US-A- 5 463 869
- DATABASE WPI Section Ch, Week 197939 Derwent Publications Ltd., London, GB; Class E36, AN 1979-70507B XP002121897 & JP 54 103778 A (HITACHI LTD), 15 août 1979 (1979-08-15)

## Description

La présente invention concerne des procédés de séparation d'air atmosphérique par distillation cryogénique améliorés avec élimination des impuretés par adsorption, préalablement à ladite distillation.

Il est connu que l'air atmosphérique contient des composés ou impuretés devant être éliminées avant toute séparation cryogénique de l'air, c'est-à-dire préalablement à l'introduction de l'air dans les échangeurs thermiques de la boîte froide d'une unité de séparation d'air.

En particulier, on peut citer les composés de type dioxyde de carbone (CO₂) et/ou vapeur d'eau (H₂O), mais aussi d'autres impuretés.

En effet, en l'absence d'un tel prétraitement de l'air, il se produirait inévitablement une condensation et une solidification en glace de ces impuretés, en particulier CO₂ et/ou vapeur d'eau, lors du refroidissement de l'air à température cryogénique, ce qui peut engendrer des problèmes de colmatage de l'équipement ou unité de séparation cryogénique, notamment les échangeurs thermiques, des colonnes de distillation... et par, là-même, une détérioration de celui-ci.

Pour éviter ces problèmes, il est d'usage de prétraiter l'air devant être séparé par voie cryogénique préalablement à cette séparation cryogénique.

Ce prétraitement de l'air est habituellement appelé épuration ou purification "en-tête" car réalisé en amont de l'unité de séparation cryogénique.

Actuellement, le prétraitement de l'air est effectué, selon le cas, par procédé TSA (Température Swing Adsorption) ou par procédé PSA (Pressure Swing Adsorption).

Classiquement, un cycle de procédé TSA comporte les étapes suivantes :
a) purification de l'air par adsorption des impuretés à pression super atmosphérique,
b) dépressurisation de l'adsorbeur jusqu'à la pression atmosphérique ou en-dessous de la pression atmosphérique,
c) régénération complète de l'adsorbant à pression atmosphérique avec un gaz chaud, notamment par les gaz résiduaires ou gaz déchets, typiquement de l'azote impur provenant d'une unité de séparation d'air et réchauffé au moyen d'un ou plusieurs échangeurs thermiques,
d) refroidissement de l'adsorbant, notamment en continuant à y introduire ledit gaz résiduaire issu de l'unité de séparation d'air, mais non réchauffé,
e) repressurisation de l'adsorbeur avec de l'air purifié issu, par exemple, d'un autre adsorbeur se trouvant en phase de production.

Par ailleurs, un cycle de procédé PSA comporte, quant à lui, sensiblement les mêmes étapes a), b) et e), mais se distingue d'un procédé TSA par une absence de réchauffement du ou des gaz résiduaires lors de l'étape de régénération (étape c)), donc l'absence de l'étape d) et, en général, un temps de cycle plus court qu'en procédé TSA.

Préférentiellement, les dispositifs de prétraitement de l'air comprennent au moins deux adsorbeurs, fonctionnant en parallèle, c'est-à-dire de manière alternée, l'un des adsorbeurs étant en phase de production, pendant que l'autre est en phase de régénération.

De tels procédés TSA ou PSA de purification d'air sont notamment décrit dans les documents US-A-3,738,084, US-A-5,531,808, US-A-5,587,003 et US-A-4,233,038.

Or, il est connu que, lorsqu'on utilise des particules d'adsorbant pour pré-purifier de l'air avant de le séparer par distillation cryogénique, il est habituellement effectué un ajustage (refroidissement à l'eau) de la température de l'air comprimé depuis une température habituellement d'au moins 80°C, voire davantage, jusqu'à la température ambiante, puis ensuite de pré-refroidir l'air avant son introduction dans le ou les adsorbeurs ; ceci étant réalisé habituellement par un groupe frigorifique amenant l'air depuis la température ambiante jusqu'à une température inférieure à la température ambiante.

Ceci est d'ailleurs clairement expliqué par le document *Industrial Gases & Cryogenics Today, IOMA Broadcaster, Air Purification for cryogenic air separation units, Jan*.*-Feb*. *1984, p. 15 et suivantes* ou par le document EP-A-438282.

En effet, il est particulièrement recommandé de pré-refroidir l'air avant de le soumettre à une étape de séparation par adsorption car, comme connu de l'homme du métier, plus la température d'adsorption est basse, plus l'efficacité de l'adsorption des impuretés augmente.

En d'autres termes, l'efficacité de la prépurification d'air est nettement favorisée pour les températures basses, c'est-à-dire les températures proches de 5°C, voire davantage encore pour des températures nettement plus basses.

Ensuite, après son passage dans la zone de purification, c'est-à-dire dans le ou les adsorbeurs, l'air débarrassé de toutes ou partie de ses impuretés néfastes, notamment de type CO₂ et H₂O, est ensuite classiquement refroidi à température cryogénique, c'est-à-dire, en général à une température inférieure à environ -120 °C, avant d'être acheminé vers l'unité de distillation cryogénique et introduit dans une ou plusieurs colonnes de distillation en vue d'y être séparé pour récupérer de l'azote, de l'oxygène et/ou de l'argon.

Or, le fait de devoir mettre en oeuvre une étape de pré-refroidissement de l'air préalablement son introduction dans le ou les adsorbeurs présente plusieurs inconvénients néfastes à l'intérêt industriel du procédé global.

En effet, cette étape de pré-refroidissement de l'air augmente notablement l'investissement global, complique le procédé, peut poser des problèmes de fiabilité et conduit donc à un surcoût de l'installation, étant donné qu'il est alors nécessaire de prévoir des moyens de pré-refroidissement, tels des échangeurs thermiques ou analogues, c'est-à-dire un groupe frigorifique.

On peut citer les documents US-A-4,249,915, EP-A-733393, EP-A-718576, EP-A-718576, US-A-5,463,869 et JP-A-54103778 décrivant divers procédés de traitement de l'air avant séparation cryogénique de celui-ci en vue de produire de l'azote et de l'oxygène.

De là, le but de la présente invention est de pallier les problèmes et inconvénients susmentionnés en proposant un procédé de séparation d'air par voie cryogénique ne nécessitant pas de pré-refroidissement de l'air par un groupe frigorifique, avant son introduction dans le ou les adsorbeurs de l'unité d'épuration en-tête, c'est-à-dire un procédé de séparation d'air par voie cryogénique simplifié par rapport aux procédés existant actuellement.

La présente invention concerne alors un procédé de séparation cryogénique d'air contenant des impuretés, dans lequel on procède selon les étapes de :
(a) compression d'air à séparer à une pression d'au moins 21.10⁵ Pa,
(b) introduction de l'air à une pression d'au moins 21.10⁵ Pa, dans l'un ou l'autre des deux récipients d'adsorption fonctionnant en parallèle et contenant chacun des particules d'au moins un adsorbant,
(c) adsorption d'au moins une partie des impuretés contenues dans l'air sur lesdites particules d'adsorbant, à une pression d'au moins 21.10⁵ Pa, à un débit d'adsorption compris entre 250 Nm³/h et 10⁶ Nm³/h, et selon un cycle de type Temperature Swing Adsorption (TSA) et
(d) refroidissement de l'air purifié à l'étape (c) jusqu'à une température cryogénique inférieure à -120°C,
(e) distillation cryogénique de l'air refroidi à l'étape (d),
dans lequel la température de l'air à l'étape (b) et/ou à l'étape (c) est supérieure ou égale à +15°C, dans lequel l'air comprimé n'est pas soumis à un pré-refroidissement subséquemment à l'étape (a) et préalablement à l'étape (b), et comportant, en outre, une étape cyclique de régénération de l'adsorbant par balayage avec un gaz de régénération ayant une température de régénération comprise entre 40°C et 350°C, et à un débit de régénération allant de 5 à 70% du débit d'adsorption.

Selon le cas, le procédé selon l'invention peut comprendre l'une ou plusieurs des caractéristiques suivantes :
- après distillation cryogénique, on récupère au moins un composé choisi parmi l'azote, l'oxygène, l'argon ou leurs mélanges. Le ou les composés ainsi produits peuvent être de pureté variable et, de préférence, on récupère au moins l'un de ces composés sous forme liquide pour valoriser l'énergie apportée par l'augmentation de la pression de l'air.
- à l'étape (c), l'adsorption est opérée à une pression de 21.10⁵ Pa à 40.10⁵ Pa, avantageusement de 22.10⁵ Pa à 38.10⁵ Pa.
- à l'étape (a), la compression est opérée à une pression de 21.10⁵ Pa à 40.10⁵ Pa, avantageusement de 22.10⁵ Pa à 38.10⁵ Pa.
- à l'étape (b), l'air introduit dans le récipient d'adsorption est à une température d'adsorption d'au moins +21 °C, de préférence de +25°C à +65°C, avantageusement de +30°C à +50°C. Lorsque l'air en sortie de compression est à une température trop élevée, par exemple +80°C, on lui fait subir un refroidissement pour l'amener dans une plage de température du procédé selon l'invention mais, de toute façon, à une température d'au moins +15°C. En d'autres termes, optionnellement, le procédé de l'invention peut comprendre une étape complémentaire d'ajustage de la température de l'air, subséquente à l'étape (a) et préalable à l'étape (b), mais sans pour autant constituer une étape de pré-refroidissement classique par un groupe frigorifique. Avantageusement, cette étape complémentaire d'ajustage de la température de l'air consiste simplement à diminuer la température de l'air par échange thermique au moyen d'un ou plusieurs échangeurs de chaleur, de préférence des échangeurs dans lesquels .circule de l'eau.
- à l'étape (c), les impuretés adsorbées sont choisies dans le groupe formé par le dioxyde de carbone, la vapeur d'eau, les oxydes d'azote, les oxydes de soufre et les hydrocarbures.
- l'adsorbant est choisi parmi les zéolites, les alumines, les gels de silice et leurs mélanges.
- la distillation cryogénique de l'étape (e) est opérée à une pression de 10⁵ Pa à 30.10⁵ Pa, de préférence de l'ordre de 1,3.10⁵ Pa à 20.10⁵ Pa.
- il comporte une étape de régénération de l'adsorbant à une température de régénération comprise entre 100°C et 280°C. De manière connue en soi, l'adsorbant subit cycliquement une régénération par chauffage à la température de régénération par balayage des particules d'adsorbant avec un gaz choisi parmi l'azote ou un mélange d'azote et d'oxygène.
- la pression de régénération est comprise entre 1.10⁵ Pa et 30.10⁵ Pa.
- les particules d'adsorbant sont choisies parmi les particules de zéolite de type faujasite, X, LSX, A, mordénite ou leurs mélanges, de préférence les particules de zéolite sont de type X ou LSX ayant un rapport Si/Al ≤1.15, de préférence d'environ 1.
- les particules d'adsorbant sont choisies parmi les particules d'alumine activée et d'alumine imprégnée.
- au moins un adsorbeur contient au moins un lit ou au moins une couche de particules de zéolite et au moins un lit ou au moins une couche de particules d'alumine, de préférence au moins un lit ou au moins une couche de particules d'alumine est situé en amont d'au moins un lit ou au moins une couche de particules de zéolite par rapport au sens de circulation de l'air.

L'invention va maintenant être mieux comprise à l'aide de l'exemple comparatif suivant et des figures annexées, donnés à titre illustratif mais non limitatif.

### Exemple comparatif

Afin de montrer l'efficacité du procédé selon la présente invention, des essais comparatifs ont été réalisés en mettant en oeuvre, d'une part, un procédé de séparation d'air selon l'art antérieur avec ou sans pré-refroidissement avant élimination des impuretés par adsorption et, d'autre part, un procédé de séparation d'air selon la présente invention.

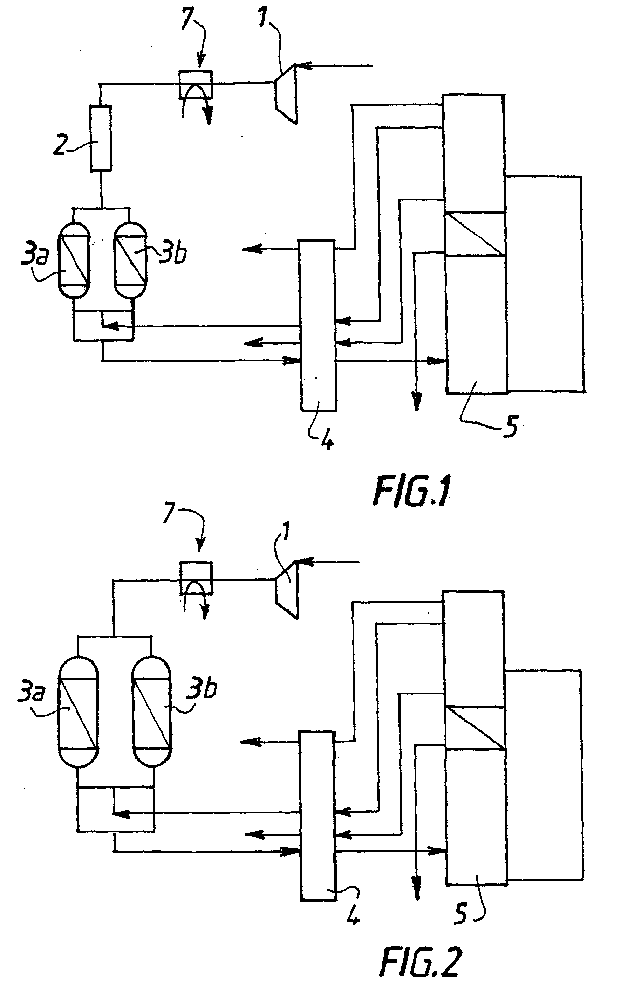

Le procédé selon l'art antérieur a été mis en oeuvre au moyen d'une installation connue telle que représentée sur la figure 1, alors que le procédé selon l'invention a été mis en oeuvre avec une installation conforme à la présente invention, telle que schématisée sur la figure 2.

Plus précisément, la figure 1 schématise une installation de séparation d'air par voie cryogénique selon laquelle l'air atmosphérique contenant des impuretés, en particulier de type CO₂ et/ou vapeur d'eau, est successivement :
- comprimé par un compresseur 1, par exemple du type à refroidissement à eau,
- légèrement ajusté en température par un échangeur thermique 7 à circulation d'eau,
- pré-refroidi par un groupe frigorifique ou système de réfrigération 2 jusqu'à une température de l'ordre de +5°C, voire même inférieure à +5°C,
- introduit dans l'un ou l'autre des adsorbeurs 3a et 3b pour y être purifié par adsorption desdites impuretés sur un ou plusieurs lits d'adsorbant, par exemple une adsorbant de type zéolite,
- refroidi à une température cryogénique, par exemple à -170°C, dans une boîte froide 4 contenant un ou plusieurs échangeurs thermiques,
- puis séparé par distillation cryogénique dans une ou plusieurs colonnes 5 de distillation cryogénique en vue de produire de l'azote et/ou de l'oxygène notamment sous forme liquide et/ou gazeuse.

En d'autres termes, selon ce procédé de l'art antérieur, l'air est soumis à une étape de pré-refroidissement par le système de réfrigération 2 avant sa purification par adsorption dans les adsorbeurs 3a ou 3b, fonctionnant en parallèle.

La figure 2 représente, par contre, un schéma d'une installation de séparation d'air par voie cryogénique selon la présente invention, laquelle est analogue à celle de la figure 1, à l'exception du fait que, dans ce cas, le système de réfrigération 2 a été supprimé.

En d'autres termes, selon la figure 2, l'air est directement envoyé, après compression et éventuellement ajustage (en 7) de sa température à une température d'au moins +15°C, de préférence de +25 à +50°C, dans au moins l'un des adsorbeurs 3a et 3b pour y être prétraité avant d'être refroidi à température cryogénique et séparé par distillation cryogénique comme précédemment.

Une conséquence de la suppression de l'étape de pré-refroidissement (en 2) avant adsorption (fig. 2) est une température d'adsorption nettement plus élevée que dans l'art antérieur (fig. 1), donc plus défavorable à l'adsorption.

Pour compenser, cette diminution des performances d'adsorption, selon la présente invention, on procède aussi, d'une part, à une augmentation de la pression d'adsorption et, d'autre part, éventuellement à une augmentation de la quantité d'adsorbant utilisé.

En effet, les inventeurs ont mis en évidence, comme montré dans le tableau ci-après, que pour aboutir à une adsorption efficace des impuretés contenues dans l'air, en l'absence de l'étape de pré-refroidissement par système de réfrigération 2 avant adsorption, il est nécessaire d'augmenter notablement la pression d'adsorption de l'air, c'est-à-dire de purifier l'air dans les adsorbeurs 3a et 3b a une pression d'au moins 11,4.10⁵ Pa, de préférence d'au moins 15.10⁵ Pa et pouvant atteindre 40.10⁵ Pa.

Cette augmentation de pression permet, d'une part, de réduire la teneur en vapeur d'eau du flux d'air et, d'autre part, de favoriser l'adsorption des impuretés contenues dans l'air en augmentant leur pression partielle.

Les conditions expérimentales et les résultats apparaissent dans le tableau ci-après.

**Tableau**

| Essais | Avec pré-refroidissement | Sans pré-refroidissement | Sans pré-refroidissement |
|---|---|---|---|
| Débit d'adsorption (Nm ³ /h) | 50 000 | 50 000 | 50 000 |
| Température d'adsorption | 10°C | 35°C | 35°C |
| Pression d'adsorption | 6.10 ⁵ Pa (art antérieur) | 6.10 ⁵ Pa (art antérieur) | 30.10 ⁵ Pa (invention) |
| Débit de régénération (Nm ³ /h) | 10 000 | 24 000 | 10 000 |
| Température de régénération | 150°C | 150°C | 150°C |
| Pression de régénération | 1,1.10 ⁵ Pa | 1,1.10 ⁵ Pa | 1,1.10 ⁵ Pa |
| Temps de cycle (minutes) | 150 | 250 | 200 |
| Masse d'adsorbant | 8 900 kg | 51 000 kg | 13 500 kg |

Il apparaît clairement au vu du tableau précédent que les essais selon l'invention (colonne de droite), basés sur une absence de pré-refroidissement par système de réfrigération et une augmentation de la pression d'adsorption, conduisent à des résultats tout-à-fait satisfaisants du point de vue industriel, c'est-à-dire des résultats sensiblement équivalents à ceux obtenus par mise en oeuvre d'une étape supplémentaire de pré-refroidissement (colonne de gauche) avec un groupe frigorifique (après éventuellement une étape d'ajustage de la température par échange thermique avec de l'eau ou un autre fluide de refroidissement) et, dans tous les cas bien meilleurs que ceux obtenus par mise oeuvre d'un procédé sans pré-refroidissement et sans augmentation de la pression d'adsorption (colonne du milieu) qui nécessite l'utilisation d'une très forte quantité d'adsorbant.

## Revendications

1. Procédé de séparation cryogénique d'air contenant des impuretés, dans lequel on procède selon les étapes de :
(a) compression d'air à séparer à une pression d'au moins 21.10⁵ Pa,
(b) introduction de l'air à une pression d'au moins 21.10⁵ Pa, dans l'un ou l'autre des deux récipients d'adsorption fonctionnant en parallèle et contenant chacun des particules d'au moins un adsorbant,
(c) adsorption d'au moins une partie des impuretés contenues dans l'air sur lesdites particules d'adsorbant, à une pression d'au moins 21.10⁵ Pa, à un débit d'adsorption compris entre 250 Nm³/h et 10⁶ Nm³/h, et selon un cycle de type Temperature Swing Adsorption (TSA), et
(d) refroidissement de l'air purifié à l'étape (c) jusqu'à une température cryogénique inférieure à -120°C,
(e) distillation cryogénique de l'air refroidi à l'étape (d),
dans lequel la température de l'air à l'étape (b) et/ou à l'étape (c) est supérieure ou égale à +15°C,
dans lequel l'air comprimé n'est pas soumis à un pré-refroidissement subséquemment à l'étape (a) et préalablement à l'étape (b), et
comportant, en outre, une étape cyclique de régénération de l'adsorbant par balayage avec un gaz de régénération ayant une température de régénération comprise entre 40°C et 350°C, et à un débit de régénération allant de 5 à 70% du débit d'adsorption.

2. Procédé selon la revendication 1, **caractérisé en ce qu'**à l'étape (c), l'adsorption est opérée à une pression de 21.10⁵ Pa à 40.10⁵ Pa

3. Procédé selon l'une des revendications 1 ou 2, **caractérisé en ce qu'**à l'étape (c), l'adsorption est opérée à une pression de 22.10⁵ Pa à 38.10⁵ Pa.

4. Procédé selon l'une des revendications 1 ou 2, **caractérisé en ce qu'**à l'étape (a), l'air est comprimé à une pression d'au moins 21.10⁵ Pa à 40.10⁵ Pa, préférentiellement de 22.10⁵ Pa à 38.10⁵ Pa.

5. Procédé selon l'une des revendications 1 à 4, **caractérisé en ce qu'**à l'étape (b), l'air introduit dans le récipient d'adsorption est à une température d'adsorption d'au moins +21 °C, de préférence de +25°C à +65°C, préférentiellement de +30°C à +50°C.

6. Procédé selon l'une des revendications 1 à 5, **caractérisé en ce qu'**à l'étape (c), les impuretés adsorbées sont choisies dans le groupe formé par le dioxyde de carbone, la vapeur d'eau, les oxydes d'azote, les oxydes de soufre et les hydrocarbures.

7. Procédé selon l'une des revendications 1 à 6, **caractérisé en ce** l'adsorbant est choisi parmi les zéolites, les alumines, les gels de silice et leurs mélanges.

8. Procédé selon l'une des revendications 1 à 7, **caractérisé en ce qu'**il comporte, subséquemment à l'étape (a) et préalablement à l'étape (b), une étape complémentaire d'ajustage de la température de l'air à une valeur d'au moins +15°C, de préférence comprise entre +30°C et +50°C.

9. Procédé selon la revendication 8, **caractérisé en ce que** l'ajustage de température est réalisé au moyen d'au moins un échangeur à eau.

10. Procédé selon la revendication 1, **caractérisé en ce que** le gaz de régénération est choisi parmi l'azote ou un mélange d'azote et d'oxygène.

## Patentansprüche

1. Verfahren zur Tieftemperaturzerlegung von Verunreinigungen enthaltender Luft, bei dem man:
(a) zu zerlegende Luft auf einen Druck von mindestens 21.10⁵ Pa verdichtet,
(b) die Luft bei einem Druck von mindestens 21.10⁵ Pa einem von zwei parallel arbeitenden und jeweils Teilchen mindestens eines Adsorptionsmittels enthaltenden Adsorptionsbehältern zuführt,
(c) bei einem Druck von mindestens 21.10⁵ Pa, einem Adsorptionsdurchsatz zwischen 250 Nm³/h und 10⁶ Nm³/h und gemäß einem Temperaturwechseladsorptionsverfahren (TSA-Verfahren) mindestens einen Teil der in der Luft enthaltenen Verunreinigungen an den Adsorptionsmittelteilchen adsorbiert,
(d) die in Schritt (c) gereinigte Luft auf eine kryogene Temperatur unter -120°C abkühlt und
(e) die in Schritt (d) abgekühlte Luft einer Tieftemperaturdestillation unterwirft,
bei dem die Lufttemperatur in Schritt (b) und/oder Schritt (c) größer gleich +15°C ist,
bei dem die verdichtete Luft nach Schritt (a) und vor Schritt (b) nicht vorgekühlt wird, und
bei dem man außerdem das Adsorptionsmittel durch Waschen mit einem Regenerationsgas bei einer Regenerationstempertaur zwischen 40°C und 350°C und bei einem Regenerationsdurchsatz von 5 bis 70% des Adsorptionsdurchsatzes zyklisch regeneriert.

2. Verfahren nach Anspruch 1, **dadurch gekennzeichnet, daß** man in Schritt (c) die Adsorption bei einem Druck von 21.10⁵ Pa bis 40.10⁵ Pa durchführt.

3. Verfahren nach Anspruch 1 oder 2, **dadurch gekennzeichnet, daß** man in Schritt (c) die Adsorption bei einem Druck von 22.10⁵ Pa bis 38.10⁵ Pa durchführt.

4. Verfahren nach Anspruch 1 oder 2, **dadurch gekennzeichnet, daß** man in Schritt (a) die Luft auf einen Druck von mindestens 21.10⁵ Pa bis 40.10⁵ Pa und vorzugsweise von 22.10⁵ Pa bis 38.10⁵ Pa verdichtet.

5. Verfahren nach einem der Ansprüche 1 bis 4, **dadurch gekennzeichnet, daß** sich in Schritt (b) die dem Adsorptionsbehälter zugeführte Luft bei einer Adsorptionstemperatur von mindestens +21°C, vorzugsweise +25°C bis +65°C und bevorzugt +30°C bis +50°C befindet.

6. Verfahren nach einem der Ansprüche 1 bis 5, **dadurch gekennzeichnet, daß** man in Schritt (c) die adsorbierten Verunreinigungen aus der Gruppe bestehend aus Kohlendioxid, Wasserdampf, Stickstoffoxiden, Schwefeloxiden und Kohlenwasserstoffen auswählt.

7. Verfahren nach einem der Ansprüche 1 bis 6, **dadurch gekennzeichnet, daß** man das Adsorptionsmittel unter Zeolithen, Aluminiumoxiden, Kieselgelen und Gemischen davon auswählt.

8. Verfahren nach einem der Ansprüche 1 bis 7, **dadurch gekennzeichnet, daß** man nach Schritt (a) und vor Schritt (b) zusätzlich die Temperatur der Luft auf einen Wert von mindestens +15°C und vorzugsweise zwischen +30°C und +50°C einstellt.

9. Verfahren nach Anspruch 8, **dadurch gekennzeichnet, daß** man die Temperatureinstellung mit Hilfe mindestens eines Wasserwärmetauschers vornimmt.

10. Verfahren nach Anspruch 1, **dadurch gekennzeichnet, daß** man das Regenerationsgas unter Stickstoff oder einem Gemisch aus Stickstoff und Sauerstoff auswählt.

## Claims

1. Process for the cryogenic separation of air containing impurities, which is carried out according to the steps of:
(a) compressing the air to be separated to a pressure of at least 21×10⁵ Pa;
(b) introducing the air at a pressure of at least 21×10⁵ Pa in either of the two adsorption vessels operating in parallel and each containing particles of at least one adsorbent;
(c) adsorbing at least some of the impurities contained in the air on the said particles of adsorbent at a pressure of at least 21×10⁵ Pa, with an adsorption rate of between 250 Sm³/h and 10⁶ Sm³/h, and a TSA (temperature swing adsorption)-type cycle;
(d) cooling the air purified in step (c) down to a cryogenic temperature of less than -120°C;
(e) cryogenically distilling the air cooled in step (d),
in which the temperature of the air in step (b) and/or in step (c) is greater than or equal to +15°C;
in which the compressed air is not subjected to a pre-cooling operation after step (a) and prior to step (b); and
comprising, furthermore, a cyclic step of regenerating the adsorbent by flushing with a regeneration gas having a regeneration temperature of between 40°C and 350°C, and at a regeneration rate ranging from 5 to 70% of the adsorption rate.

2. Process according to Claim 1, **characterized in that** in step (c) the adsorption is carried out at a pressure from 21×10⁵Pa to 40×10⁵Pa.

3. Process according to either of Claims 1 and 2, **characterized in that**, in step (c), the adsorption is carried out at a pressure ranging from 21×10⁵ Pa to 38×10⁵ Pa.

4. Process according to either of Claims 1 and 2, **characterized in that**, in step (a), the air is compressed to a pressure ranging from 21×10⁵ Pa to 40×10⁵ Pa, more preferably ranging from 22×10⁵ Pa to 38×10⁵ Pa.

5. Process according to one of Claims 1 to 4, **characterized in that**, in step (b), the air introduced into the adsorption vessel is at an adsorption temperature of at least +21°C, preferably ranging from +25°C to +65°C and more preferably from +30°C to +50°C.

6. Process according to one of Claims 1 to 5, **characterized in that**, in step (c), the adsorbed impurities are chosen from the group formed by carbon dioxide, water vapour, nitrogen oxides, sulphur oxides and hydrocarbons.

7. Process according to one of Claims 1 to 6, **characterized in that** the adsorbent is chosen from zeolites, aluminas, silica gels and mixtures thereof.

8. Process according to one of Claims 1 to 7, **characterized in that** it includes, after step (a) and before step (b), a complementary step of adjusting the temperature of the air to a temperature of at least +15°C, preferably between +30°C and +50°C.

9. Process according to Claim 8, **characterized in that** the temperature adjustment is carried out by means of at least one water exchanger.

10. Process according to Claim 1, **characterized in that** the regeneration gas is chosen from nitrogen or a mixture of nitrogen and oxygen.
